# EUROPÄISCHE PATENTANMELDUNG

(11) **EP 4 697 508 A1**
(43) Veröffentlichungstag der Anmeldung: **18.02.2026**
(21) Anmeldenummer: 25195487.1
(22) Anmeldetag: 12.08.2025
(51) Int. Cl.: H01R 4/02, H01M 50/543, H01R 4/70, H01R 13/502, H01R 13/504, H01R 13/52

(54) **VERBINDUNGSANORDNUNG ZUR MECHANISCHEN UND ELEKTRISCHEN VERBINDUNG EINES STARREN LEITERS MIT EINEM KONTAKTIERUNGSELEMENT UND VERFAHREN DAZU**

(30) Priorität: 12.08.2024 DE 102024122976
(71) Anmelder: Lisa Dräxlmaier GmbH, 84137 Vilsbiburg (DE)
(72) Erfinder: Krivohlavek, Dalibor, 84137 Vilsbiburg (DE)

(57) **Zusammenfassung**

Die Offenbarung betrifft eine Verbindungsanordnung (100) zum mechanischen und elektrischen Verbinden eines starren stromführenden Leiters (110) mit einem elektrisch leitenden Kontaktierungselement (120), wobei die Verbindungsanordnung (100) Folgendes umfasst: einen starren stromführenden Leiter (110) mit einem umlaufenden Dichtungsabschnitt (112); ein starres stromführendes Kontaktierungselement (120), das mit dem Leiter (110) elektrisch und mechanisch zusammenfügbar, insbesondere verschweißbar ist; wobei das Kontaktierungselement (120) ein Gehäuse (121) mit einer Gehäusedichtung (122) aufweist; und ein flexibles Verbindungselement (200), das ausgebildet ist, den Dichtungsabschnitt (112) des Leiters (110) mit der Gehäusedichtung (122) unter Gewährung eines Bewegungsspielraums in zumindest einer Raumdimension mechanisch elastisch zu verbinden, um Toleranzen zwischen dem Dichtungsabschnitt (112) des Leiters (110) und der Gehäusedichtung (122) aufgrund des Zusammenfügens des Kontaktierungselements (120) mit dem Leiter (110) auszugleichen.

## Beschreibung

### Technisches Gebiet

Die vorliegende Erfindung betrifft das Gebiet der mechanischen und elektrischen Verbindungen und Kontaktierungen. Die Erfindung betrifft eine Verbindungsanordnung zur mechanischen und elektrischen Verbindung eines starren stromführenden Leiters mit einem elektrisch leitenden Kontaktierungselement, beispielsweise einer Stromschiene mit einem Ladedosenkontakt eines batterie-elektrischen Fahrzeugs. Die Erfindung betrifft insbesondere eine Flachleiterabdichtung zum Steckergehäuse mit Toleranzausgleich.

### Stand der Technik

In batterie-elektrischen Fahrzeugen müssen hohe Ströme von einem Ort im Fahrzeug zu einem anderen Ort im Fahrzeug geleitet werden, beispielsweise zum Laden der Antriebsbatterie zwischen Batterie und Ladedose oder zur Versorgung von elektrischen Verbrauchern oder Komponenten. Zum Übertragen der Ströme werden Flachleiter oder Koaxial-/Rundleiter eingesetzt. Das elektrische und mechanische Verbinden von Flachleiter mit Ladedosenstecker erfolgt meist über ein Fügen, vorzugsweise Schweißen des Flachleiters mit dem Kontaktelement des Ladedosensteckers. Die durch das Fügen bzw. Schweißen entstandene starre Verbindung zwischen Gehäusedichtung des Kontaktelements und Flachleiterdichtung führt zu seitlichen Dichtungskompressionen durch die mangelhafte Ausrichtung zwischen Flachleiter und dem im Gehäuse integrierten Kontaktierungselement. Das Ergebnis ist eine schlechte Dichtleistung an dieser Stelle, was zu einem vorzeitigen Verschleiß der Verbindung führen kann.

### Beschreibung der Erfindung

Eine Aufgabe der Erfindung ist es daher, ein Konzept zum einfachen und sicheren Verbinden eines starren stromführenden Leiters wie beispielsweise eines Flachleiters mit einem Kontaktierungselement wie beispielsweise einem Kontaktierungselement eines Ladedosensteckers, insbesondere für die Kontaktierung im Fahrzeug, zu schaffen, bei dem die oben genannten Nachteile nicht auftreten.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, eine flexible Verbindung zwischen Gehäusedichtung und Flachleiterdichtung zu schaffen, welche ein gewisses Maß an Seiten- und Winkelbewegungen zum Toleranzausgleich erlaubt. Dabei ist der Dichtungsabschnitt des Steckergehäuses relativ zum Dichtungsabschnitt des Flachleiters beweglich ausgeführt.

Die Lösung ermöglicht eine Kompensation von Bauteilfehlausrichtungen während des Schweißprozesses und eine Kompensation von Verzügen als Folge des Schweißprozesses.

Es handelt sich hier allgemein um eine elektrische und mechanische Verbindung zwischen einem starren stromführenden Leiter und einem starren stromführenden Kontaktierungselement, die nicht auf den Einsatz in batterieelektrischen Fahrzeugen oder in Ladedosenstecksystemen begrenzt ist.

Gemäß einem ersten Aspekt wird die oben beschriebene Aufgabe gelöst durch eine Verbindungsanordnung zum mechanischen und elektrischen Verbinden eines starren stromführenden Leiters mit einem elektrisch leitenden Kontaktierungselement, wobei die Verbindungsanordnung Folgendes umfasst: einen starren stromführenden Leiter mit einem umlaufenden Dichtungsabschnitt; ein starres stromführendes Kontaktierungselement, das mit dem Leiter elektrisch und mechanisch zusammenfügbar, insbesondere verschweißbar ist; wobei das Kontaktierungselement ein Gehäuse mit einer Gehäusedichtung aufweist; und ein flexibles Verbindungselement, das ausgebildet ist, den Dichtungsabschnitt des Leiters mit der Gehäusedichtung unter Gewährung eines Bewegungsspielraums in zumindest einer Raumdimension mechanisch elastisch zu verbinden, um Toleranzen zwischen dem Dichtungsabschnitt des Leiters und der Gehäusedichtung aufgrund des Zusammenfügens des Kontaktierungselements mit dem Leiter auszugleichen.

Mit einer solche Verbindungsanordnung kann ein einfaches und sicheres Verbinden des starren stromführenden Leiters mit dem Kontaktierungselement ermöglicht werden, bei der auftretende Bauteilfehlausrichtungen während des Schweißprozesses und Verzüge als Folge des Schweißprozesses durch das flexible Verbindungselement kompensiert werden.

Gemäß einer beispielhaften Ausführungsform der Verbindungsanordnung umfasst das flexible Verbindungselement eine Hartkomponente und eine Weichkomponente; wobei die Hartkomponente ausgebildet ist, eine relative Lage des flexiblen Verbindungselements zu dem stromführenden Leiter und zu dem Kontaktierungselement zu bestimmen; und wobei die Weichkomponente ausgebildet ist, die mechanisch elastische Verbindung zwischen dem Dichtungsabschnitt des Leiters und der Gehäusedichtung herzustellen.

Eine solche Zwei-Komponenten-Struktur lässt sich leicht fertigen. Die Hartkomponente kann beispielsweise ein harter steifer Kunststoff sein wie beispielsweise PBT (Polybutylenterephthalat) mit oder ohne GF (Glasfaser)-Anteil, die Weichkomponente kann ein weicher elastischer Kunststoff sein, wie beispielsweise TPE (thermoplastisches Elastomer) oder Silikon. Die Hartkomponente sorgt für die notwendige Formstabilität und die Weichkomponente muss die Dichtleistung der Verbindung gewährleisten und zusätzlich die notwendige Elastizität zwischen Gehäusedichtung und Dichtung des stromführenden Leiters ermöglichen.

Gemäß einer beispielhaften Ausführungsform der Verbindungsanordnung ist das flexible Verbindungselement ausgebildet, beim Zusammenfügen des Kontaktierungselements mit dem Leiter Seiten- und Winkelbewegungen zwischen dem Dichtungsabschnitt des Leiters und der Gehäusedichtung auszugleichen.

Damit lässt sich ein weitreichender Toleranzausgleich in allen Raumdimensionen realisieren. Für den Verbau des stromführenden Leiters und des Kontaktierungselements im Fahrzeug lässt sich damit ausreichend Freiraum und Flexibilität schaffen.

Gemäß einer beispielhaften Ausführungsform der Verbindungsanordnung ist das flexible Verbindungselement als ein 2-Komponenten Spritzgussteil ausgebildet.

Damit lässt sich eine gewünschte Materialpaarung zur technischen Optimierung der Funktion realisieren. Das flexible Verbindungselement lässt sich direkt als ein Formteil anspritzen. Ferner kann die Griffigkeit und der Kantenschutz des Verbindungselements verbessert werden.

Gemäß einer beispielhaften Ausführungsform der Verbindungsanordnung weist der starre stromführende Leiter eine umlaufende Isolierung auf, in welcher der umlaufende Dichtungsabschnitt ausgeformt ist.

Mit der Isolierung lässt sich ein Einbau oder Ausbau des starren Leiters auch im Betrieb des Fahrzeugs bzw. beim Ladevorgang realisieren, wenn der Leiter beispielsweise hohe Ladeströme transportiert. Die Isolierung stellt sicher, dass an der Außenseite des Leiters kein elektrisches Potential anliegt, das für das Bedienpersonal gefährlich sein könnte.

Gemäß einer beispielhaften Ausführungsform der Verbindungsanordnung ist die umlaufende Isolierung rippenförmig ausgeformt und ist ausgebildet, den Leiter beim Zusammenfügen des Kontaktierungselements mit dem Leiter entlang einer Längsachse des Leiters zu zentrieren.

Die rippenförmige Ausgestaltung sorgt für eine gute Zentrierbarkeit des stromführenden Leiters, so dass die Fügeverbindung zentriert ausgerichtet ist und der Strom über den gesamten Querschnitt von Leiter zu Kontaktelement fließen kann.

Gemäß einer beispielhaften Ausführungsform der Verbindungsanordnung weist das flexible Verbindungselement ein oder mehrere Streben auf, die an einem Innenumfang des flexiblen Verbindungselements ausgeformt sind, wobei die Streben ausgebildet sind, das flexible Verbindungselement beim Zusammenfügen des Kontaktierungselements mit dem Leiter zu zentrieren.

Die Streben am flexiblen Verbindungselement sorgen für eine gute Zentrierung des flexiblen Verbindungselements beim Verbinden des Leiters mit dem Kontaktierungselement mittels des flexiblen Verbindungselements. Damit kann eine gute, robuste und langlebige Verbindung zwischen Leiter und Kontaktierungselement hergestellt werden.

Gemäß einer beispielhaften Ausführungsform der Verbindungsanordnung umfasst das flexible Verbindungselement einen ersten Abschnitt, der ausgebildet ist, einen mechanisch elastischen Dichtkontakt mit dem umlaufenden Dichtungsabschnitt des Leiters herzustellen; und das flexible Verbindungselement umfasst einen zweiten Abschnitt, der ausgebildet ist, einen mechanisch elastischen Dichtkontakt mit der Gehäusedichtung des Kontaktierungselements herzustellen.

Damit kann eine flexible elastische Verbindung zwischen der Gehäusedichtung und dem umlaufenden Dichtungsabschnitt des Leiters hergestellt werden. Eine solche "schwimmende" Verbindung erlaubt den Ausgleich von Toleranzen in allen Raumrichtungen.

Gemäß einer beispielhaften Ausführungsform der Verbindungsanordnung ist der erste Abschnitt an einem Innenumfang eines ersten Endes des flexiblen Verbindungselements ausgeformt; und der zweite Abschnitt ist an einem Außenumfang eines zweiten Endes des flexiblen Verbindungselements ausgeformt.

Die Ausbildung des ersten Abschnitts am Innenumfang des flexiblen Verbindungselements erlaubt eine geeignete, großflächige Ineingriffnahme der umlaufenden Dichtung des Leiters; die Ausbildung des zweiten Abschnitt am Außenumfang des flexiblen Verbindungselements erlaubt eine geeignete, großflächige Ineingriffnahme der Gehäusedichtung des Kontaktierungselements.

Gemäß einer beispielhaften Ausführungsform der Verbindungsanordnung umfasst die Verbindungsanordnung ein mechanisches Schutzelement, das ausgebildet ist, den starren stromführenden Leiter im Bereich des ersten Abschnitts des flexiblen Verbindungselements einzufassen; wobei das Schutzelement mit dem Gehäuse des Kontaktierungselements mechanisch verbindbar ist, um ein Eindringen von Schmutz zu unterdrücken.

Das Schutzelement dient zum Schutz des Leiters vor Umgebungseinflüssen. Es kann mit dem Gehäuse des Kontaktierungselements verbunden werden, um so die Verbindungsanordnung nach außen hin abzudichten und entsprechend vor äußeren Einflüssen, wie Schutz oder Staub schützen.

Gemäß einer beispielhaften Ausführungsform der Verbindungsanordnung ist das mechanische Schutzelement entlang des Leiters verschiebbar, und ist ausgebildet, nach dem Zusammenfügen des Kontaktierungselements mit dem Leiter durch ein Verschieben entlang des Leiters in Richtung des Kontaktierungselements eine mechanische Verbindung, insbesondere eine Rastverbindung, mit dem Kontaktierungselement herzustellen.

Damit lässt sich die notwendige Flexibilität beim Herstellen der Verbindung über Fügeverfahren oder Schweißen realisieren. Das flexible Verbindungselement kann vor dem Schweißen auf den Leiter geschoben werden und nach dem Schweißen an entsprechender Stelle über der Verbindung positioniert werden. Schließlich kann das Schutzelement über das flexible Verbindungselement geschoben werden, um eine Abdichtung nach außen hin zu gewährleisten und die Verbindungsanordnung gegen äußere Umgebungseinflüsse, beispielsweise im Fahrzeuginneren oder im Motorraum zu schützen.

Gemäß einem zweiten Aspekt wird die oben beschriebene Aufgabe gelöst durch ein Verfahren zum Herstellen einer mechanischen und elektrischen Verbindung zwischen einem starren stromführenden Leiter und einem elektrisch leitenden Kontaktierungselement, wobei das Verfahren folgende Schritte umfasst: Bereitstellen eines starren stromführenden Leiters mit einem umlaufenden Dichtungsabschnitt und eines starren stromführenden Kontaktierungselements, welches ein Gehäuse mit einer Gehäusedichtung aufweist; elektrisches und mechanisches Zusammenfügen, insbesondere Verschweißen, des Leiters mit dem Kontaktierungselement; und mechanisch elastisches Verbinden des Dichtungsabschnitts des Leiters mit der Gehäusedichtung mittels eines flexiblen Verbindungselements unter Gewährung eines Bewegungsspielraums in zumindest einer Raumdimension, um Toleranzen zwischen dem Dichtungsabschnitt des Leiters und der Gehäusedichtung aufgrund des Zusammenfügens des Kontaktierungselements mit dem Leiter auszugleichen.

Mit einem solchen Verfahren kann ein einfaches und sicheres Verbinden eines starren stromführenden Leiters mit einem Kontaktierungselement ermöglicht werden, bei der auftretende Bauteilfehlausrichtungen während des Schweißprozesses und Verzüge als Folge des Schweißprozesses durch das flexible Verbindungselement kompensiert werden.

### Kurze Figurenbeschreibung

Im Folgenden wird die Erfindung anhand von Ausführungsbeispielen und den Figuren näher beschrieben. Es zeigen:
- Fig. 1: eine Schnittdarstellung einer erfindungsgemäßen Verbindungsanordnung 100 gemäß einer Ausführungsform, wobei der Schnitt quer zum stromführenden Leiter 110 und dem Kontaktierungselement 120 dargestellt ist;
- Fig. 2: eine dreidimensionale Darstellung eines flexiblen Verbindungselements 200 gemäß einer Ausführungsform;
- Fig. 3: eine dreidimensionale Darstellung eines mechanischen Schutzelements 111 zum Schutz des stromführenden Leiters 110 gemäß einer Ausführungsform;
- Fig. 4: eine dreidimensionale Darstellung einer erfindungsgemäßen Verbindungsanordnung 100 gemäß einer Ausführungsform, bei der stromführender Leiter 110 und Kontaktierungselement 120 miteinander verbunden sind;
- Fig. 5: eine dreidimensionale Darstellung einer erfindungsgemäßen Verbindungsanordnung 100 gemäß einer Ausführungsform, bei der stromführender Leiter 110 und Kontaktierungselement 120 nicht miteinander verbunden sind;
- Fig. 6: eine dreidimensionale Darstellung einer erfindungsgemäßen Verbindungsanordnung 100 gemäß einer Ausführungsform, bei der stromführender Leiter 110 und Kontaktierungselement 120 für den Fügeprozess miteinander verbunden sind, aber das Gehäuse 121 des Kontaktierungselements 120 noch nicht mit dem mechanischen Schutzelement 111 verbunden sind; und
- Fig. 7: ein Verfahren 700 zum Herstellen einer erfindungsgemäßen mechanischen und elektrischen Verbindung zwischen einem starren stromführenden Leiter 110 und einem stromführenden Kontaktierungselement 120 gemäß einer Ausführungsform.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

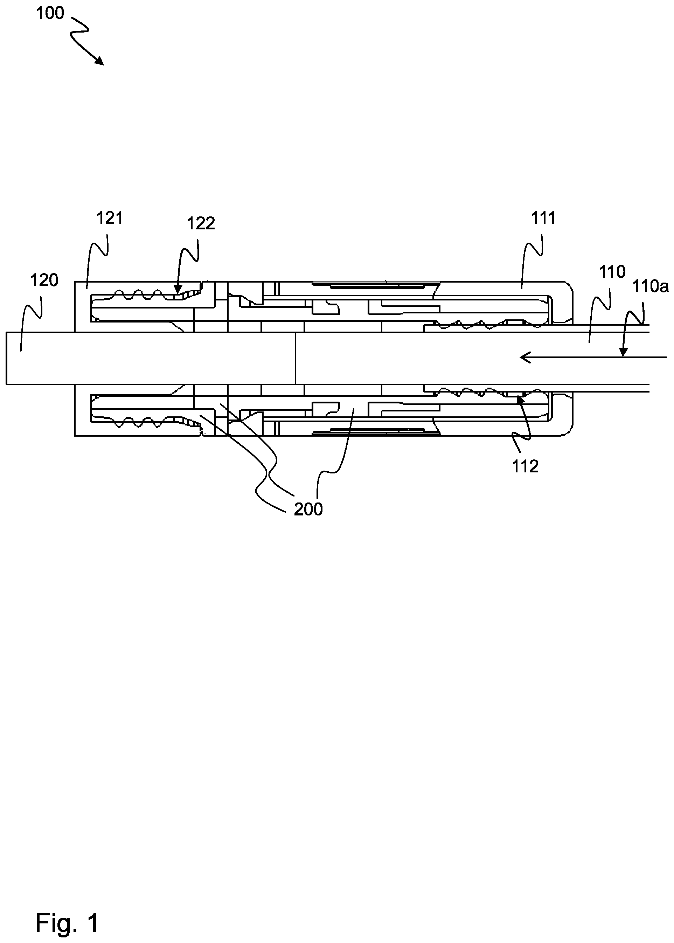

Fig. 1 zeigt eine Schnittdarstellung einer erfindungsgemäßen Verbindungsanordnung 100 gemäß einer Ausführungsform, wobei der Schnitt quer zum stromführenden Leiter 110 und dem Kontaktierungselement 120 dargestellt ist.

Die Verbindungsanordnung 100 dient zum mechanischen und elektrischen Verbinden eines starren stromführenden Leiters 110 mit einem elektrisch leitenden Kontaktierungselement 120.

Die Verbindungsanordnung 100 umfasst einen starren stromführenden Leiter 110 mit einem umlaufenden Dichtungsabschnitt 112 (schematisch dargestellt durch die Berge und Täler am Umfang des Leiters 110).

Die Verbindungsanordnung 100 umfasst ein starres stromführendes Kontaktierungselement 120, das mit dem Leiter 110 elektrisch und mechanisch zusammenfügbar, beispielsweise verschweißbar ist. Das Kontaktierungselement 120 weist ein Gehäuse 121 mit einer Gehäusedichtung 122 auf, wie in Figur 1 dargestellt.

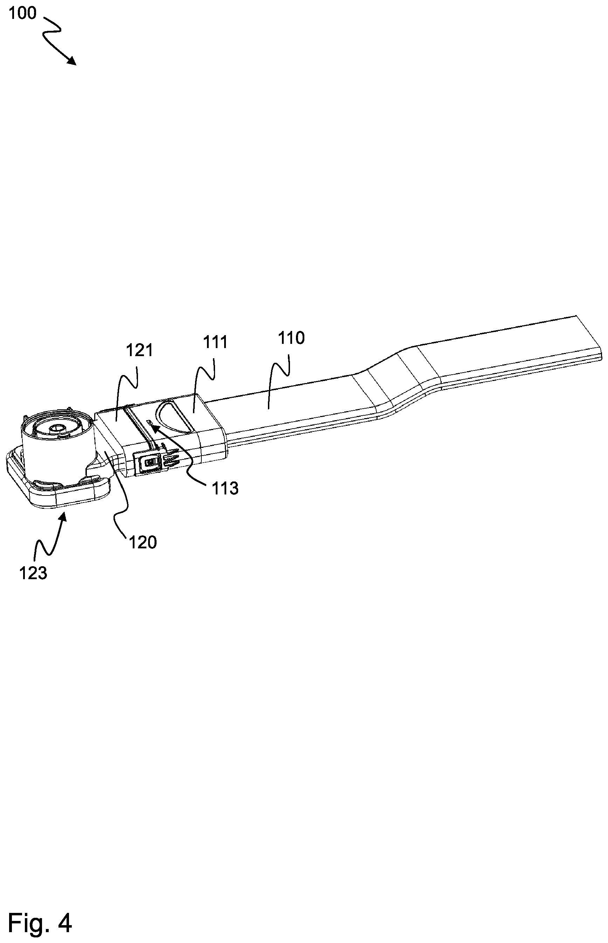

Das Kontaktierungselement kann beispielsweise eine Stromschiene oder eine andere Art starrer Leiter sein, der mit einem Kontaktelementstecker 123 beispielsweise einer Ladedose eines batterie-elektrischen Fahrzeugs verbunden ist, wie in den Figuren 4 bis 6 näher dargestellt.

Die Verbindungsanordnung 100 umfasst ferner ein flexibles Verbindungselement 200, das ausgebildet ist, den Dichtungsabschnitt 112 des Leiters 110 mit der Gehäusedichtung 122 unter Gewährung eines Bewegungsspielraums in zumindest einer Raumdimension mechanisch elastisch zu verbinden, um Toleranzen zwischen dem Dichtungsabschnitt 112 des Leiters 110 und der Gehäusedichtung 122 aufgrund des Zusammenfügens des Kontaktierungselements 120 mit dem Leiter 110 auszugleichen.

Elektrische Leitungen dienen der Verdrahtung und Verschaltung von elektrischen Komponenten. Sie lassen sich die die Unterkategorien flexibel und starre Leitungen (bzw. Leiter oder Leitungsabschnitte oder auch hier Kontaktierungselemente) einteilen. Starre Leiter sind üblicherweise eindrähtig und massiv und sind für die feste Verlegung vorgesehen, flexible Leitungen sind meist flexible feindrahtige Aderleitungen für die bewegliche Verlegung. Starre Leiter werden für die feste, d.h. ortsfeste Elektroinstallation verwendet. Sie dürfen nicht beweglich verlegt werden, da Kabel mit starren Drähten sonst brechen würden. Daher eignen sie sich gut für die Gebäudeinstallation oder die ortsfeste Verlegung innerhalb der Fahrzeugkarosserie. Flexible Leitungen hingegen eignen sich für jegliche ortsveränderliche bewegliche Elektroinstallation. Die Leitungsquerschnitte der elektrischen Leitungen, d.h., der starren Leiter und der flexiblen Leitungen, bemessen sich vor allem nach der Belastung, der die Leitung ausgesetzt ist und danach, wie und wo die Leitung verlegt wird.

Das flexible Verbindungselement 200 kann beispielsweise eine Hartkomponente und eine Weichkomponente umfassen. Die Hartkomponente kann ausgebildet sein, eine relative Lage des flexiblen Verbindungselements 200 zu dem stromführenden Leiter 110 und zu dem Kontaktierungselement 120 zu bestimmen. Die Weichkomponente kann ausgebildet sein, die mechanisch elastische Verbindung zwischen dem Dichtungsabschnitt 112 des Leiters 110 und der Gehäusedichtung 122 herzustellen. Damit wird verhindert, dass der Dichtungsabschnitt 112 des Leiters 110 direkt mit der Gehäusedichtung 122 des Kontaktierungselements mechanisch verbunden ist, so dass es zu keinem Einpressen der beiden Dichtungen kommt. Im Gegenteil, es kann eine schwimmende Verbindung zwischen den beiden Dichtungen realisiert werden, die in der Lage ist, Toleranzen beim Fügeverfahren bzw. beim Schweißprozess zwischen den beiden Dichtungen auszugleichen.

Die Hartkomponente ist hier starr, während die Weichkomponente flexibel, also stauchbar und dehnbar ist.

Das flexible Verbindungselement 200 kann ausgebildet sein, beim Zusammenfügen des Kontaktierungselements 120 mit dem Leiter 110 Seiten- und Winkelbewegungen zwischen dem Dichtungsabschnitt 112 des Leiters 110 und der Gehäusedichtung 122 auszugleichen. Damit wird eine schonende Verbindung zwischen den zwei Komponenten realisiert, die damit robust und langlebig ist.

Das flexible Verbindungselement 200 kann beispielsweise als ein 2-Komponenten Spritzgussteil ausgebildet sein und im 2K-Spritzguss hergestellt werden.

Der starre stromführende Leiter 110 weist beispielsweise eine umlaufende Isolierung auf, in welcher der umlaufende Dichtungsabschnitt 112 ausgeformt ist, wie in Figur 1 zu sehen.

Die umlaufende Isolierung kann beispielsweise rippenförmig ausgeformt sein und ausgebildet sein, den Leiter beim Zusammenfügen des Kontaktierungselements 120 mit dem Leiter 110 entlang einer Längsachse 110a des Leiters 110 zu zentrieren, wie in Figur 1 dargestellt.

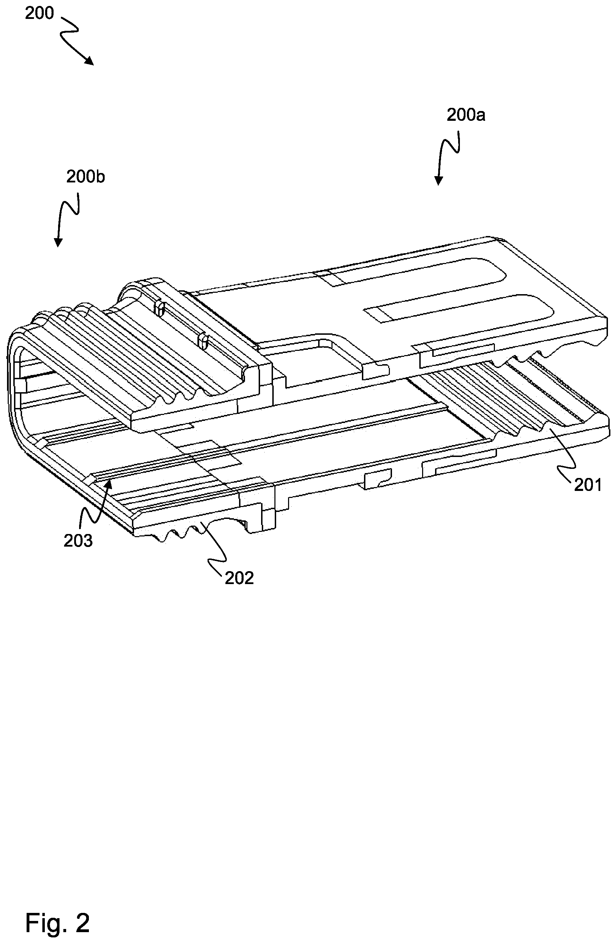

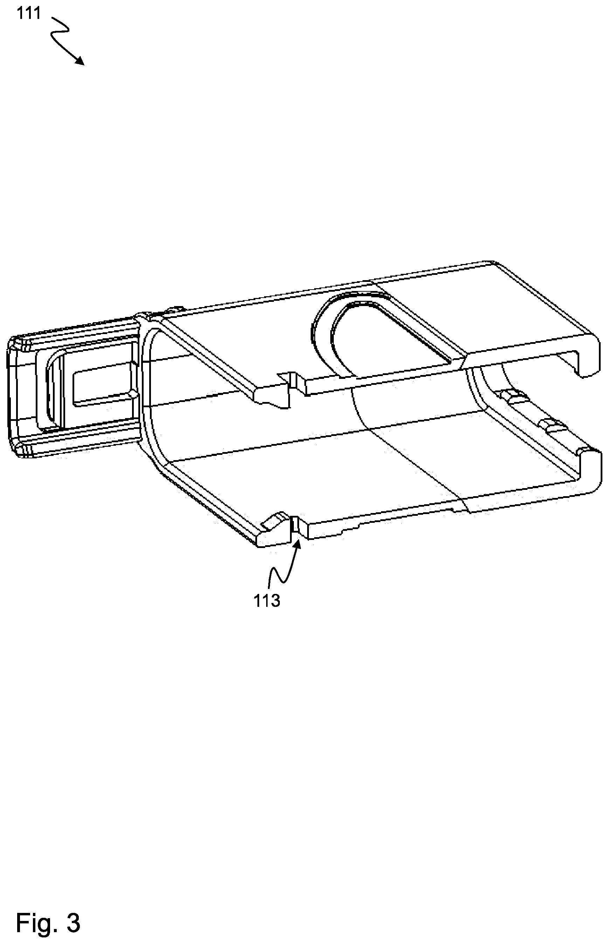

Die Verbindungsanordnung 100 umfasst ferner ein mechanisches Schutzelement 111, wie näher in Figur 3 dargestellt, das ausgebildet ist, den starren stromführenden Leiter 110 im Bereich des ersten Abschnitts 201 des flexiblen Verbindungselements 200 (wie in Figur 2 dargestellt) einzufassen. Das Schutzelement 111 ist mit dem Gehäuse 121 des Kontaktierungselements 120 mechanisch verbindbar, um ein Eindringen von Schmutz zu unterdrücken.

Das mechanische Schutzelement 111 ist entlang des Leiters 110 verschiebbar und ist ausgebildet, nach dem Zusammenfügen des Kontaktierungselements 120 mit dem Leiter 110 durch ein Verschieben entlang des Leiters 110 in Richtung des Kontaktierungselements 120 eine mechanische Verbindung, insbesondere eine Rastverbindung, mit dem Kontaktierungselement 120 herzustellen.

Fig. 2 zeigt eine dreidimensionale Darstellung eines flexiblen Verbindungselements 200 gemäß einer Ausführungsform. Das flexible Verbindungselement 200 entspricht dem in Figur 1 dargestellten flexiblen Verbindungselement 200. Es ist in Figur 2 aber alleine, d.h., ohne Verbindung mit dem Kontaktierungselement 120 und dem starren Leiter 110 dargestellt.

Das flexible Verbindungselement 200 ist ausgebildet, den Dichtungsabschnitt 112 des Leiters 110 mit der Gehäusedichtung 122, wie in Figur 1 dargestellt, unter Gewährung eines Bewegungsspielraums in zumindest einer Raumdimension mechanisch elastisch zu verbinden, um Toleranzen zwischen dem Dichtungsabschnitt 112 des Leiters 110 und der Gehäusedichtung 122 aufgrund des Zusammenfügens des Kontaktierungselements 120 mit dem Leiter 110 auszugleichen.

Das flexible Verbindungselement 200 kann ein oder mehrere Streben 203 aufweisen, wie in Figur 2 dargestellt, die an einem Innenumfang des flexiblen Verbindungselements 200 in Längsrichtung, d.h. in Richtung des stromführenden Leiters 110 ausgeformt sind. Die Streben 203 sind ausgebildet, das flexible Verbindungselement 200 beim Zusammenfügen des Kontaktierungselements 120 mit dem Leiter 110 zu zentrieren.

Das flexible Verbindungselement 200 umfasst einen ersten Abschnitt 201, der ausgebildet ist, einen mechanisch elastischen Dichtkontakt mit dem umlaufenden Dichtungsabschnitt 112 des Leiters 110 herzustellen. Das flexible Verbindungselement 200 umfasst einen zweiten Abschnitt 202, der ausgebildet ist, einen mechanisch elastischen Dichtkontakt mit der Gehäusedichtung 122 des Kontaktierungselements 120 herzustellen.

Der erste Abschnitt 201 ist an einem Innenumfang eines ersten Endes 200a (hier auf der rechten Seite) des flexiblen Verbindungselements 200 ausgeformt. Der zweite Abschnitt 202 ist an einem Außenumfang eines zweiten Endes 200b (hier auf der linken Seite) des flexiblen Verbindungselements 200 ausgeformt.

Fig. 3 zeigt eine dreidimensionale Darstellung eines mechanischen Schutzelements 111 zum Schutz des stromführenden Leiters 110 gemäß einer Ausführungsform.

Das mechanische Schutzelement 111 entspricht dem in Figur 1 dargestellten mechanischen Schutzelement 111. Das mechanische Schutzelement 111 ist ausgebildet, den starren stromführenden Leiter 110, wie in Figur 1 dargestellt, im Bereich des ersten Abschnitts 201 des flexiblen Verbindungselements 200, wie in Figur 2 dargestellt, einzufassen. Das Schutzelement 111 ist mit dem Gehäuse 121 des Kontaktierungselements 120 mechanisch verbindbar, um ein Eindringen von Schmutz zu unterdrücken.

Das mechanische Schutzelement 111 ist entlang des Leiters 110 verschiebbar und ist ausgebildet, nach dem Zusammenfügen des Kontaktierungselements 120 mit dem Leiter 110 und Einsetzen des flexiblen Verbindungselements 200 durch ein Verschieben entlang des Leiters 110 in Richtung des Kontaktierungselements 120 eine mechanische Verbindung, insbesondere eine Rastverbindung, mit dem Kontaktierungselement 120 herzustellen.

Fig. 4 zeigt eine dreidimensionale Darstellung einer erfindungsgemäßen Verbindungsanordnung 100 gemäß einer Ausführungsform, bei der stromführender Leiter 110 und Kontaktierungselement 120 miteinander verbunden sind.

Diese Ausführungsform der Verbindungsanordnung 100 stellt eine Ladedosensteckverbindung dar. Sie umfasst einen Kontaktelementstecker 123, beispielsweise für eine Ladedose eines batterieelektrischen Fahrzeugs, ein stromführendes Kontaktierungselement 120, das mit dem Kontaktelementstecker 123 elektrisch und mechanisch verbunden ist, und einen stromführenden starren Leiter 110, der über ein flexibles Verbindungselement 200 (hier in Figur 4 nicht zu sehen) mit dem Kontaktierungselement 120 elektrisch und mechanisch verbunden ist, wobei eine Abdeckung über ein mechanisches Schutzelement 111 entsprechend der Darstellung aus Figur 3 erfolgt.

Das Kontaktierungselement 120, der stromführende starre Leiter 110 und das flexible Verbindungselement 200 entsprechen den jeweiligen Komponenten aus Figur 1 und Figur 2. Das flexible Verbindungselement 200 ist innerhalb des Kontaktierungselements 120 und dem mechanischen Schutzelement 111 untergebracht und daher in Figur 4 nicht zu sehen.

In dem mechanischen Schutzelement 111 ist eine Verriegelungsöffnung 113 zu erkennen, über die das mechanische Schutzelement 111 mit dem Gehäuse 121 des Kontaktierungselements 120 über einen passenden Verriegelungszahn verriegelt ist. Die Verriegelungsverbindung kann eine Steckverbindung oder eine Clipverbindung zwischen dem Schutzelement 111 und dem Kontaktierungselement 120 sicher verschließen.

Der Verriegelungszahn ist ferner dafür ausgelegt, die Relativbewegung zwischen dem Schutzelement 111 und dem flexiblen Verbindungselement 200 zu begrenzen. Er übernimmt im möglichen Servicefall die Funktion der Verliersicherung.

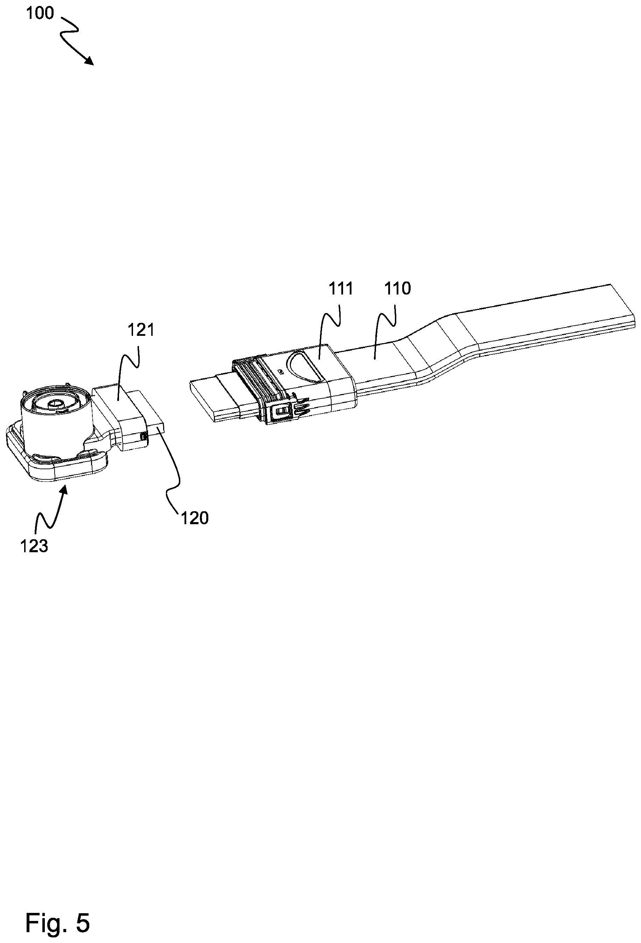

Fig. 5 zeigt eine dreidimensionale Darstellung einer erfindungsgemäßen Verbindungsanordnung 100 gemäß einer Ausführungsform, bei der stromführender Leiter 110 und Kontaktierungselement 120 nicht miteinander verbunden sind.

Es sind die gleichen Komponenten dargestellt wie in Figur 4, jedoch im offenen Zustand. Die erste Komponente ist der Kontaktelementstecker 123 mit dem stromführenden Kontaktierungselement 120, die zweite Komponente ist der stromführende starre Leiter 110 mit dem mechanischen Schutzelement 111. Das flexible Verbindungselement 200 ist hier nicht dargestellt. Es wird beim Herstellen der Verbindung zwischen das Kontaktierungselement 120 und den starren Leiter gesteckt bzw. geschoben und nach dem Herstellen der Verbindung mit dem mechanischen Schutzelement 111 abgedeckt.

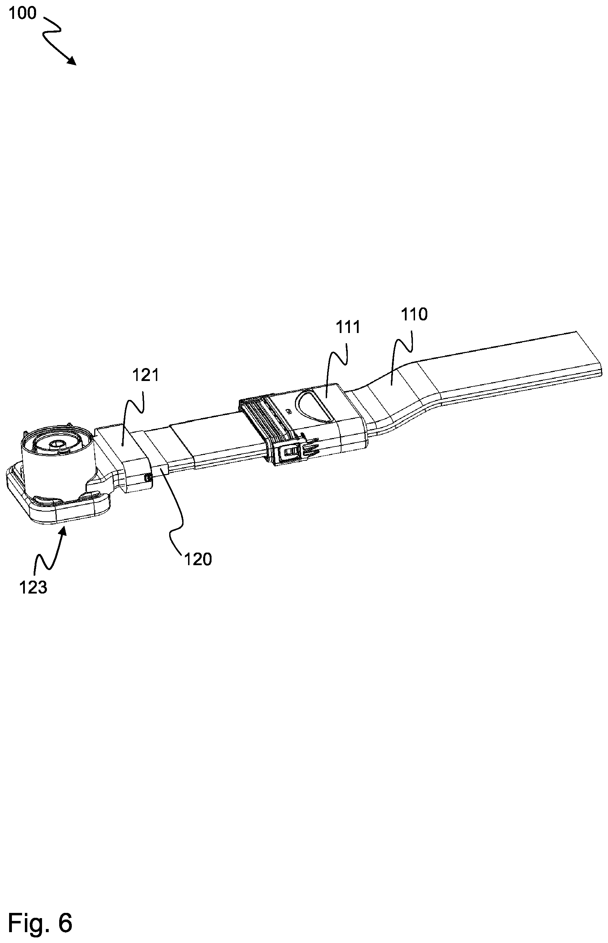

Fig. 6 zeigt eine dreidimensionale Darstellung einer erfindungsgemäßen Verbindungsanordnung 100 gemäß einer Ausführungsform, bei der stromführender Leiter 110 und Kontaktierungselement 120 für den Fügeprozess miteinander verbunden sind, aber das Gehäuse 121 des Kontaktierungselements 120 noch nicht mit dem mechanischen Schutzelement 111 verbunden sind.

Analog zu Figur 5 ist das flexible Verbindungselement 200 hier nicht dargestellt. Es wird beim Herstellen der Verbindung zwischen das Kontaktierungselement 120 und den starren Leiter gesteckt bzw. geschoben und nach dem Herstellen der Verbindung mit dem mechanischen Schutzelement 111 abgedeckt.

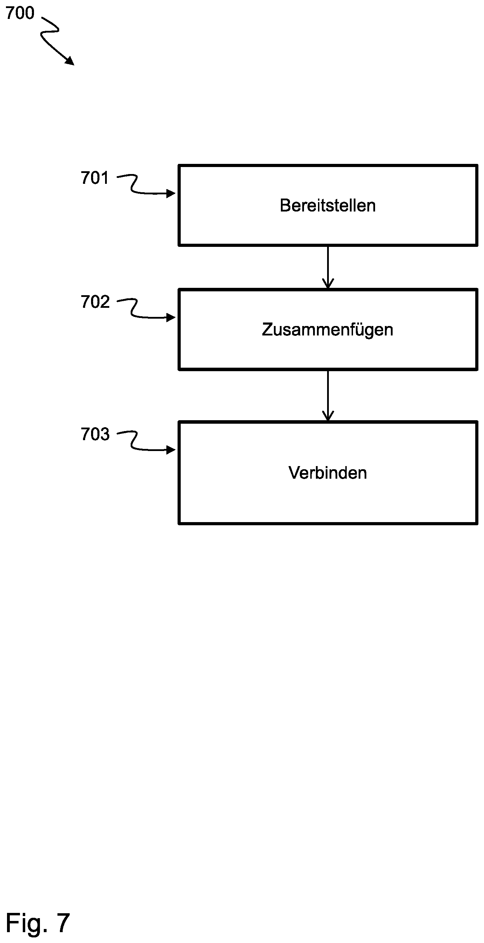

Fig. 7 zeigt ein Verfahren 700 zum Herstellen einer erfindungsgemäßen mechanischen und elektrischen Verbindung zwischen einem starren stromführenden Leiter 110 und einem elektrisch leitenden Kontaktierungselement 120 gemäß einer Ausführungsform.

Das Verfahren 700 umfasst ein Bereitstellen 701 eines starren stromführenden Leiters 110 mit einem umlaufenden Dichtungsabschnitt 112 und eines starren stromführenden Kontaktierungselements 120, welches ein Gehäuse 121 mit einer Gehäusedichtung 122 aufweist, wie in Figur 1 dargestellt.

Das Verfahren 700 umfasst ein elektrisches und mechanisches Zusammenfügen 702, insbesondere Verschweißen, des Leiters 110 mit dem Kontaktierungselement 120.

Das Verfahren 700 umfasst ein mechanisch elastisches Verbinden des Dichtungsabschnitts 112 des Leiters 110 mit der Gehäusedichtung 122 mittels eines flexiblen Verbindungselements 200, wie in den Figuren 1 und 2 dargestellt, unter Gewährung eines Bewegungsspielraums in zumindest einer Raumdimension, um Toleranzen zwischen dem Dichtungsabschnitt 112 des Leiters 110 und der Gehäusedichtung 122 aufgrund des Zusammenfügens des Kontaktierungselements 120 mit dem Leiter 110 auszugleichen.

### BEZUGSZEICHENLISTE

- 100: erfindungsgemäße Verbindungsanordnung gemäß erster Ausführungsform
- 110: stromführender Leiter
- 110a: Längsrichtung des stromführenden Leiters
- 111: mechanisches Schutzelement des stromführenden Leiters
- 112: umlaufender Dichtungsabschnitt des stromführenden Leiters
- 113: Verriegelungsöffnung im mechanischen Schutzelement
- 120: stromführendes Kontaktierungselement
- 121: Gehäuse des Kontaktierungselements
- 122: Gehäusedichtung
- 123: Kontaktelementstecker

- 200: flexibles Verbindungselement
- 200a: erstes Ende des flexiblen Verbindungselements
- 200b: zweites Ende des flexiblen Verbindungselements
- 201: erster Abschnitt des flexiblen Verbindungselements
- 202: zweiter Abschnitt des flexiblen Verbindungselements
- 203: Streben im flexiblen Verbindungselement

- 700: erfindungsgemäßes Verfahren zur Herstellung einer mechanischen und elektrischen Verbindung zwischen einem Leiter und einem Kontaktierungselement
- 701: Bereitstellen eines starren stromführenden Leiters
- 702: Zusammenfügen des Leiters mit dem Kontaktierungselement
- 703: Verbinden des Dichtungsabschnitts des Leiters mit der Gehäusedichtung

## Patentansprüche

1. Verbindungsanordnung (100) zum mechanischen und elektrischen Verbinden eines starren stromführenden Leiters (110) mit einem elektrisch leitenden Kontaktierungselement (120), wobei die Verbindungsanordnung (100) Folgendes umfasst:
einen starren stromführenden Leiter (110) mit einem umlaufenden Dichtungsabschnitt (112);
ein starres stromführendes Kontaktierungselement (120), das mit dem Leiter (110) elektrisch und mechanisch zusammenfügbar, insbesondere verschweißbar ist; wobei das Kontaktierungselement (120) ein Gehäuse (121) mit einer Gehäusedichtung (122) aufweist; und
ein flexibles Verbindungselement (200), das ausgebildet ist, den Dichtungsabschnitt (112) des Leiters (110) mit der Gehäusedichtung (122) unter Gewährung eines Bewegungsspielraums in zumindest einer Raumdimension mechanisch elastisch zu verbinden, um Toleranzen zwischen dem Dichtungsabschnitt (112) des Leiters (110) und der Gehäusedichtung (122) aufgrund des Zusammenfügens des Kontaktierungselements (120) mit dem Leiter (110) auszugleichen.

2. Verbindungsanordnung (100) nach Anspruch 1,
wobei das flexible Verbindungselement (200) eine Hartkomponente und eine Weichkomponente umfasst;
wobei die Hartkomponente ausgebildet ist, eine relative Lage des flexiblen Verbindungselements (200) zu dem stromführenden Leiter (110) und zu dem Kontaktierungselement (120) zu bestimmen; und
wobei die Weichkomponente ausgebildet ist, die mechanisch elastische Verbindung zwischen dem Dichtungsabschnitt (112) des Leiters (110) und der Gehäusedichtung (122) herzustellen.

3. Verbindungsanordnung (100) nach Anspruch 1 oder 2,
wobei das flexible Verbindungselement (200) ausgebildet ist, beim Zusammenfügen des Kontaktierungselements (120) mit dem Leiter (110) Seiten- und Winkelbewegungen zwischen dem Dichtungsabschnitt (112) des Leiters (110) und der Gehäusedichtung (122) auszugleichen.

4. Verbindungsanordnung (100) nach einem der vorhergehenden Ansprüche,
wobei das flexible Verbindungselement (200) als ein 2-Komponenten Spritzgussteil ausgebildet ist.

5. Verbindungsanordnung (100) nach einem der vorhergehenden Ansprüche,
wobei der starre stromführende Leiter (110) eine umlaufende Isolierung aufweist, in welcher der umlaufende Dichtungsabschnitt (112) ausgeformt ist.

6. Verbindungsanordnung (100) nach Anspruch 5,
wobei die umlaufende Isolierung rippenförmig ausgeformt ist und ausgebildet ist, den Leiter beim Zusammenfügen des Kontaktierungselements (120) mit dem Leiter (110) entlang einer Längsachse (110a) des Leiters (110) zu zentrieren.

7. Verbindungsanordnung (100) nach einem der vorhergehenden Ansprüche,
wobei das flexible Verbindungselement (200) ein oder mehrere Streben (203) aufweist, die an einem Innenumfang des flexiblen Verbindungselements (200) ausgeformt sind, wobei die Streben (203) ausgebildet sind, das flexible Verbindungselement (200) beim Zusammenfügen des Kontaktierungselements (120) mit dem Leiter (110) zu zentrieren.

8. Verbindungsanordnung (100) nach einem der vorhergehenden Ansprüche,
wobei das flexible Verbindungselement (200) einen ersten Abschnitt (201) umfasst, der ausgebildet ist, einen mechanisch elastischen Dichtkontakt mit dem umlaufenden Dichtungsabschnitt (112) des Leiters (110) herzustellen; und
wobei das flexible Verbindungselement (200) einen zweiten Abschnitt (202) umfasst, der ausgebildet ist, einen mechanisch elastischen Dichtkontakt mit der Gehäusedichtung (122) des Kontaktierungselements (120) herzustellen.

9. Verbindungsanordnung (100) nach Anspruch 8,
wobei der erste Abschnitt (201) an einem Innenumfang eines ersten Endes (200a) des flexiblen Verbindungselements (200) ausgeformt ist; und
wobei der zweite Abschnitt (202) an einem Außenumfang eines zweiten Endes (200b) des flexiblen Verbindungselements (200) ausgeformt ist.

10. Verbindungsanordnung (100) nach Anspruch 8 oder 9, mit:
einem mechanischen Schutzelement (111), das ausgebildet ist, den starren stromführenden Leiter (110) im Bereich des ersten Abschnitts (201) des flexiblen Verbindungselements (200) einzufassen;
wobei das Schutzelement (111) mit dem Gehäuse (121) des Kontaktierungselements (120) mechanisch verbindbar ist, um ein Eindringen von Schmutz zu unterdrücken.

11. Verbindungsanordnung (100) nach einem der Ansprüche 8 bis 10,
wobei das mechanische Schutzelement (111) entlang des Leiters (110) verschiebbar ist, und ausgebildet ist, nach dem Zusammenfügen des Kontaktierungselements (120) mit dem Leiter (110) durch ein Verschieben entlang des Leiters (110) in Richtung des Kontaktierungselements (120) eine mechanische Verbindung, insbesondere eine Rastverbindung, mit dem Kontaktierungselement (120) herzustellen.

12. Verfahren (700) zum Herstellen einer mechanischen und elektrischen Verbindung zwischen einem starren stromführenden Leiter (110) und einem elektrisch leitenden Kontaktierungselement (120), wobei das Verfahren (700) folgende Schritte umfasst:
Bereitstellen (701) eines starren stromführenden Leiters (110) mit einem umlaufenden Dichtungsabschnitt (112) und eines starren stromführenden Kontaktierungselements (120), welches ein Gehäuse (121) mit einer Gehäusedichtung (122) aufweist;
elektrisches und mechanisches Zusammenfügen (702), insbesondere Verschweißen, des Leiters (110) mit dem Kontaktierungselement (120); und
mechanisch elastisches Verbinden des Dichtungsabschnitts (112) des Leiters (110) mit der Gehäusedichtung (122) mittels eines flexiblen Verbindungselements (200) unter Gewährung eines Bewegungsspielraums in zumindest einer Raumdimension, um Toleranzen zwischen dem Dichtungsabschnitt (112) des Leiters (110) und der Gehäusedichtung (122) aufgrund des Zusammenfügens des Kontaktierungselements (120) mit dem Leiter (110) auszugleichen.
